# EUROPÄISCHE PATENTANMELDUNG

(11) **EP 3 056 333 A1**
(43) Veröffentlichungstag der Anmeldung: **17.08.2016**
(21) Anmeldenummer: 16153688.3
(22) Anmeldetag: 01.02.2016
(51) Int. Cl.: B29D 30/06

(54) **REIFENFORMSEGMENT**

(30) Priorität: 06.02.2015 DE 102015202143
(71) Anmelder: Herbert Maschinenbau GmbH & Co. KG, 36088 Hünfeld (DE)
(72) Erfinder: POPP, Sebastian, Dipl.-Ing., 36100 Petersberg (DE); GROSCH, Martin, 36088 Hünfeld (DE); HANREICH, Klaus, 15745 Wildau (DE)
(74) Vertreter: advotec.

(57) **Zusammenfassung**

Die Erfindung betrifft ein Reifenformsegment (10) für eine Reifenform zum Vulkanisieren von Reifenrohlingen, wobei das Reifenformsegment aus einer Segmentbasis (11) und einem Formeinsatz (12) ausgebildet ist, wobei der Formeinsatz eine Negativform (28) einer Lauffläche eines Reifens ausbildet, wobei der Formeinsatz aus einer Matrize (15), welche die Negativform ausbildet, und einer Haltevorrichtung (16), welche die Matrize aufnimmt, gebildet ist, wobei die Matrize aus einer Mehrzahl von Matrizenelementen (17, 18) ausgebildet ist.

## Beschreibung

Die Erfindung betrifft ein Reifenformsegment für eine Reifenform zum Vulkanisieren von Reifenrohlingen, wobei das Reifenformsegment aus einer Segmentbasis und einem Formeinsatz ausgebildet ist, wobei der Formeinsatz eine Negativform einer Lauffläche eines Reifens ausbildet.

Die aus dem Stand der Technik bekannten Reifenformen zum Vulkanisieren von Reifenrohlingen (Green Tire) sind regelmäßig aus einer Vielzahl von Reifenformsegmenten ausgebildet. Die Reifenformsegmente bilden die Negativform der gesamten Lauffläche aus und sind so an der Reifenform bewegbar angeordnet, dass sie zum Entformen des vulkanisierten Reifens auseinander bewegt und damit voneinander getrennt werden können. Auch umfasst eine Reifenform Reifenformsegmente für die jeweiligen Seitenwände eines Reifens. Die Formeinsätze für die Seitenwände sind ebenfalls relativ zueinander, und zu den Formeinsätzen für die Lauffläche bewegbar, um ein Einlegen des Reifenrohlings und eine Entnahme des fertigen Reifens aus der Form bewerkstelligen zu können. Bei der geschlossenen Reifenform liegen sämtliche Reifenformsegmente dicht aneinander an, sodass eine Negativform für den gesamten Reifen bzw. dessen Außenkontur ausgebildet ist.

Mit den vorbeschriebenen Reifenformen können Reifen für Kraftfahrzeuge, sogenannte Autoreifen für beispielsweise PKW und LKW, mit einer profilierten Lauffläche hergestellt werden. Gleichwohl ist es auch möglich, Reifen mit einer unprofilierten Lauffläche mit einer Reifenform herzustellen.

Bei einer aus einer Mehrzahl von Reifenformsegmenten zusammengesetzten Reifenform sind die Reifenformsegmente aus einer Segmentbasis und einem Formeinsatz ausgebildet. Die Segmentbasis kann eine konkav ausgeformte, vergleichsweise stabile Metallplatte sein, auf der der um ein Vielfaches dünnere Formeinsatz mit der Negativform einer profilierten Lauffläche montiert ist. Die Segmentbasis kann dann einerseits die Schließkräfte der Reifenform aufnehmen und übertragen sowie den vergleichsweise filigranen Formeinsatz abstützen.

Bei den aus dem Stand der Technik bekannten Reifenformsegmenten ist nachteilig, dass die Formeinsätze nur umständlich auszuwechseln sind, wenn sie über beispielsweise Stifte an der Segmentbasis befestigt werden. Weiter erstreckt sich ein Formeinsatz regelmäßig über die gesamte Segmentbasis. Derartige Formeinsätze können vergleichsweise filigrane und komplexe Geometrien aufweisen, wenn beispielsweise die Lauffläche mit einer Vielzahl von unterschiedlichsten Profilrillen, die ein oder mehrere Muster ausbilden, ausgebildet ist. Folglich ist die Herstellung derartiger Formeinsätze zeit- und kostenintensiv und erfolgt regelmäßig durch eine Fräsbearbeitung des Formeinsatzes. Eventuelle Fehler oder auch ein Werkzeugschaden bei der Herstellung eines Formeinsatzes haben dann hohe Kosten zur Folge. Je nach Größe der betreffenden Reifenform kann es auch erforderlich sein, entsprechend angepasste, große Werkzeugmaschinen zur Herstellung der Formeinsätze einzusetzen.

Der vorliegenden Erfindung liegt daher die Aufgabe zugrunde, ein Reifenformsegment für eine Reifenform vorzuschlagen, welches eine flexible Nutzung der Reifenform bei gleichzeitig vereinfachter Herstellung derselben ermöglicht.

Diese Aufgabe wird durch ein Reifenformsegment mit den Merkmalen des Anspruchs 1 und ein Verfahren zur Herstellung eines Reifenformsegments mit den Merkmalen des Anspruchs 15 gelöst.

Das erfindungsgemäße Reifenformsegment für eine Reifenform zum Vulkanisieren von Reifenrohlingen ist aus einer Segmentbasis und einem Formeinsatz ausgebildet, wobei der Formeinsatz eine Negativform einer Lauffläche eines Reifens ausbildet, wobei der Formeinsatz aus einer Matrize, welche die Negativform ausbildet, und einer Haltevorrichtung, welche die Matrize aufnimmt, gebildet ist, wobei die Matrize aus einer Mehrzahl von Matrizenelementen ausgebildet ist.

Der Formeinsatz hat zusammen mit der Segmentbasis die Form eines Segments eines Kreisrings, wobei ein Kreisbogen des Formeinsatzes bzw. der vom Formeinsatz ausgebildeten Negativform der profilierten Lauffläche einem Kreisbogen der Lauffläche entspricht. Es handelt sich folglich um eine Negativform eines Abschnitts der Lauffläche. Dadurch, dass der Formeinsatz aus der Matrize und der Haltevorrichtung, welche die Matrize haltert, ausgebildet ist, wird es möglich, die Matrize aus einer Mehrzahl von Matrizenelementen auszubilden und mit der Segmentbasis zu verbinden. Die Matrize wird dadurch kostengünstiger herstellbar, da insbesondere bei komplexen Profilierungen der Lauffläche kleinere Abschnitte der Matrize bearbeitet werden können. Eventuelle Fehler bei der Bearbeitung der Matrize bzw. des Matrizenelements verursachen somit geringere Ausschusskosten. Darüber hinaus ist es möglich, die aus Matrizenelementen zusammengesetzte Matrize auch in bereits vorhandene Segmentbasen einer Reifenform einzusetzen. Die Haltevorrichtung dient dabei als ein Adapter, der die Matrizenelemente zu der Matrize zusammenführt. Darüber hinaus ist es nun auch einfacher möglich, besonders große Reifenformsegmente kostengünstiger herzustellen, da dies auch mit kleineren Werkzeugmaschinen zur Bearbeitung der Matrizenelemente erfolgen kann. Auch können Matrizen üblicher Größe dann auch mit kleineren Werkzeugmaschinen oder alternativen Fertigungsverfahren einfach und kostengünstig hergestellt werden.

Die Matrize kann beispielsweise aus zwei, vier oder sechs Matrizenelementen ausgebildet sein. Auch kann die Matrize aus mehr als sechs Matrizenelementen oder auch aus einer ungeraden Anzahl von Matrizenelementen ausgebildet sein.

Der Formeinsatz wird besonders einfach auswechselbar, wenn die Haltevorrichtung in die Segmentbasis lösbar eingesetzt und formschlüssig befestigt ist. Die Haltevorrichtung kann beispielsweise mit der Segmentbasis über Stifte verbunden sein. Alternativ ist es auch möglich, die Haltevorrichtung mit der Segmentbasis mittels einer Schraubverbindung zu verschrauben. In beiden Fällen kann die Haltevorrichtung von der Segmentbasis einfach demontiert und ausgewechselt werden, wenn beispielsweise ein Wechsel einer Profilierung der Lauffläche erforderlich ist.

So kann die Matrize die Negativform der Lauffläche mit einem Profilmuster ausbilden, wobei die Negativform bzw. das Profilmuster eine konkave Formschale mit darin angeordneten Stegen aufweisen kann, die Profilblöcke und/oder Profilabschnitte ausbilden können. Die konkave Formschale entspricht dann im Wesentlichen einer Gestalt der Lauffläche des herzustellenden Reifens, wobei die Stege Profilrillen des herzustellenden Reifens entsprechen. Je nach Anzahl und Anordnung der Stege kann sich so ein Profilmuster ergeben, wobei ein beispielsweise von Stegen umgebener Bereich einem Profilblock entspricht. Gleichwohl können die Stege auch so angeordnet sein, dass sich zusammenhängende Profilabschnitte bei dem abschließend hergestellten Reifen ergeben.

Eine Breite der Formschale kann relativ zu einer Dicke der Formschale in einem Verhältnis von 100 : 1, bevorzugt 160 : 1, besonders bevorzugt 200 : 1 oder größer ausgebildet sein. Beispielsweise kann die Breite 500 mm oder größer betragen, wobei die Dicke der Formschale bzw. deren Wandung an der dünnsten Stelle der Formschale zwischen den Stegen, 5 mm oder weniger als 3 mm betragen kann.

Vorteilhaft kann die Formschale in die Haltevorrichtung lösbar eingesetzt und formschlüssig befestigt sein. So wird es möglich, die Formschale bei Bedarf auch von der Haltevorrichtung einfach zu trennen und auszuwechseln. Darüber hinaus können dann die Matrizenelemente, die zusammen die Formschale ausbilden, einfacher in der Haltevorrichtung befestigt werden.

So kann die Formschale an parallelen Seitenrändern einen Vorsprung und/oder eine Eintiefung aufweisen, der bzw. die mit einem Vorsprung und/oder einer Eintiefung in Seitenwänden der Haltevorrichtung korrespondiert, derart, dass die Formschale zumindest in orthogonaler Richtung zu der Lauffläche in der Haltevorrichtung formschlüssig gehaltert ist. Die jeweils übereinstimmend ausgebildeten Vorsprünge und Eintiefungen ermöglichen dann beispielsweise ein Einschieben der Matrizenelemente entlang bzw. in Richtung eines Kreisbogens des Formeinsatzes bzw. der Lauffläche. Die Matrizenelemente sind dann nicht mehr in orthogonaler Richtung quer zur Lauffläche bewegbar und sind so formschlüssig in der Haltevorrichtung gehaltert. Auch bei einer geschlossenen Reifenform wird dann eine Bewegung der Matrizenelemente in Richtung des Kreisbogens der Lauffläche nicht mehr ermöglicht. Gleichwohl können die Matrizenelemente besonders einfach, ohne eine Zuhilfenahme von Werkzeug, ausgewechselt werden. Auch kann vorgesehen sein, die Eintiefungen bzw. die Vorsprünge so auszubilden, dass die Matrizenelemente bzw. die Matrize nur in einer Richtung bzw. Lage in der Haltevorrichtung montiert werden können. Ein versehentliches Einsetzen der Matrizenelemente bzw. Matrize in einer entgegengesetzten Richtung, was eine Änderung einer Laufrichtung der Lauffläche zur Folge hätte, kann so vermieden werden.

Die Matrizenelemente können zumindest entlang einer Teilungsnaht der Matrize jeweils eine Passfläche ausbilden, wobei die Passflächen übereinstimmend ausgebildet sein können. Demnach kann vorgesehen sein, die Matrizenelemente derart entlang einer Teilungsnaht aufzuteilen, dass so an der Formschale ausgebildete Passflächen möglichst dicht aneinander anliegen. An einem mit einer entsprechenden Reifenform fertig gestellten Reifen ist dann eine ursprüngliche Lage der Teilungsnaht im Wesentlichen nicht mehr erkennbar.

Vorteilhaft kann eine Passfläche einen Vorsprung und/oder eine Eintiefung aufweisen, der bzw. die mit einem Vorsprung und/oder einer Eintiefung einer übereinstimmenden Passfläche korrespondieren kann. So kann sichergestellt werden, dass aneinander anliegende Matrizenelemente nicht relativ zueinander an den Passflächen verrutschen können. Der Vorsprung kann beispielsweise keilförmig an einem Matrizenelement bzw. dessen Passfläche ausgebildet sein, wobei dann an dem benachbarten Matrizenelement die Eintiefung ebenfalls keilförmig ausgebildet sein kann. Dadurch wird eine gegenseitige Zentrierung der Passflächen bzw. der Matrizenelemente und damit eine besonders maßhaltige Anordnung in der Haltevorrichtung ermöglicht.

Besonders vorteilhaft ist es, wenn die Eintiefung und der Vorsprung in einer Wandung der Formschale ausgebildet sind. Die Wandung der Formschale liegt dann dicht an der Haltevorrichtung an und bildet im Wesentlichen die Formschale aus. So können die Eintiefung und der Vorsprung auch jeweils über die gesamte Passfläche benachbarter Matrizenelemente verlaufen. Optional ist es auch möglich, punktuelle Eintiefungen und Vorsprünge an den jeweiligen Passflächen vorzusehen.

Die Teilungsnaht kann entlang einer Mittellinie von Stegen der Negativform verlaufend ausgebildet sein. Wenn die Matrize bzw. die Matrizenelemente Stege zur Ausbildung einer profilierten Lauffläche aufweisen, können diese Stege vorteilhaft zur Positionierung der Teilungsnaht genutzt werden. Die Teilungsnaht kann dann innerhalb eines Stegs, entlang einer Mittellinie des Stegs verlaufend ausgebildet sein, sodass zwei besonders große, aneinander anliegende Passflächen der jeweiligen Matrizenelemente entstehen. Wenn je nach Profilierung der Lauffläche die Stege beispielsweise zickzackförmig angeordnet und miteinander verbunden sind, kann die Teilungsnaht ebenfalls zickzackförmig verlaufen. So kann dann auch vermieden werden, dass sich die Matrizenelemente relativ zueinander in der Haltevorrichtung verschieben können.

Die Teilungsnaht kann in Längsrichtung und/oder in Querrichtung zu der Lauffläche verlaufen. Beispielsweise kann die Lauffläche durch die Teilungsnaht hälftig, in der der Mitte geteilt sein, wobei je nach Größe des Reifenformsegments auch eine Teilung alleine oder ergänzend in Querrichtung zu der Lauffläche vorgesehen sein kann. Die Teilungsnaht kann dabei auch unabhängig von Stegen der Negativform verlaufen.

Besonders vorteilhaft ist es, wenn die Matrize aus Edelstahl ausgebildet ist. Edelstahl nach EN 10020 eignet sich besonders gut zur Herstellung der Matrize, da dann die Matrizenelemente dünnwandig und gleichzeitig besonders stabil hergestellt werden können. Eine Herstellung einer Matrize aus Edelstahl kann beispielsweise durch selektives Laserschmelzen bzw. Laserauftragsschweißen erfolgen. Die Haltevorrichtung kann ebenfalls aus Stahl, Aluminium oder einem anderen geeigneten Werkstoff ausgebildet sein. Auch kann das Material der Haltevorrichtung so ausgewählt werden, dass sich aufgrund unterschiedlicher Ausdehnungskoeffizienten der Matrize und der Haltevorrichtung eine kraftschlüssige Passung zwischen Matrize und Haltevorrichtung ergibt.

Die erfindungsgemäße Reifenform umfasst eine Mehrzahl von erfindungsgemäßen Reifenformsegmenten. Weitere Ausführungsformen einer Reifenform ergeben sich aus den Merkmalsbeschreibungen der auf den Vorrichtungsanspruch 1 rückbezogenen Unteransprüche.

Bei dem erfindungsgemäßen Verfahren zur Herstellung eines erfindungsgemäßen Reifenformsegments mit einem Matrizenelement wird das Matrizenelement mittels Laserauftragsschweißen hergestellt. Bei dem Laserauftragsschweißen bzw. Laserstrahl-Generieren oder "Micro Cladding" erfolgt ein Oberflächenauftrag mittels Aufschmelzen und gleichzeitigem Aufbringen von Material. So können dreidimensionale Bauteile bzw. das vergleichsweise filigrane Matrizenelement leicht hergestellt werden. Weitere Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1:**: ein Reifenformsegment in einer perspektivischen Ansicht;
- **Fig. 2:**: eine Explosionsdarstellung des Reifenformsegments;
- **Fig. 3:**: eine Vorderansicht von Matrizenelementen;
- **Fig. 4:**: eine Detailansicht A aus **Fig. 3****;**
- **Fig. 5:**: eine Draufsicht eines Matrizenelements;
- **Fig. 6:**: eine Seitenansicht des Matrizenelements aus **Fig. 5****.**

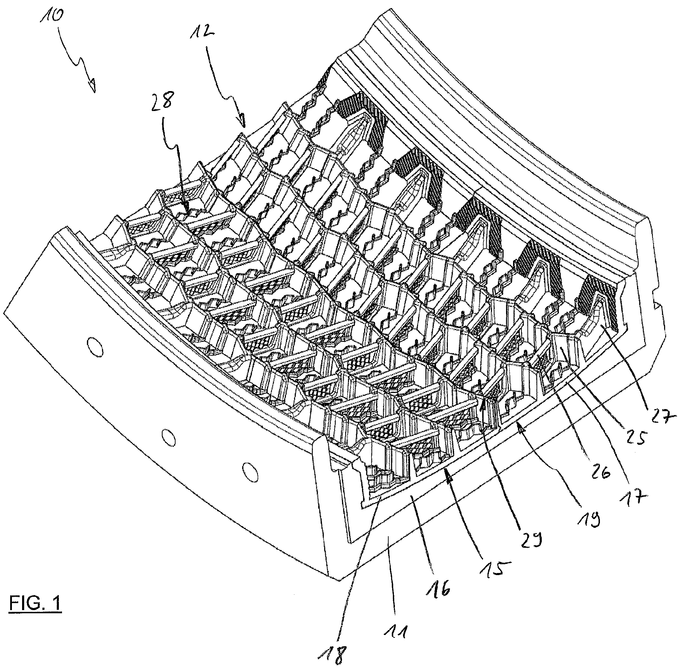

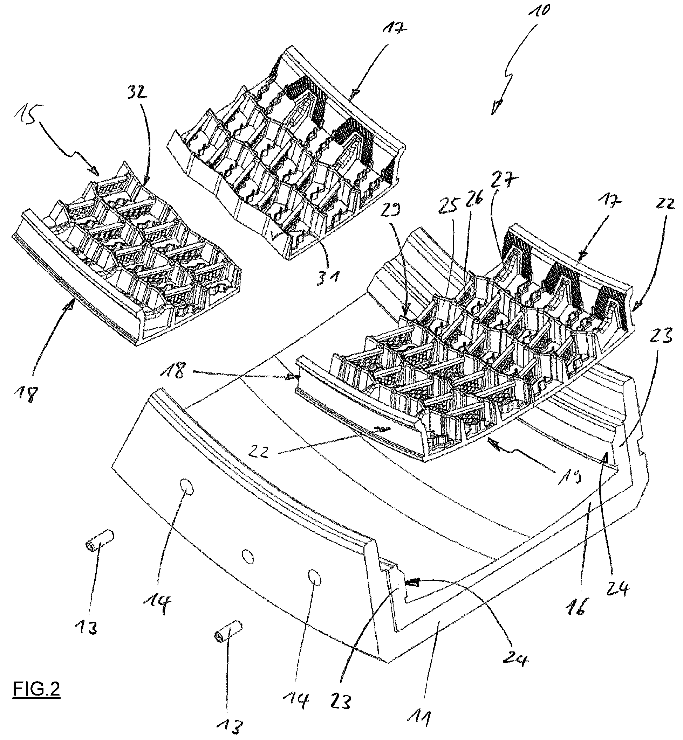

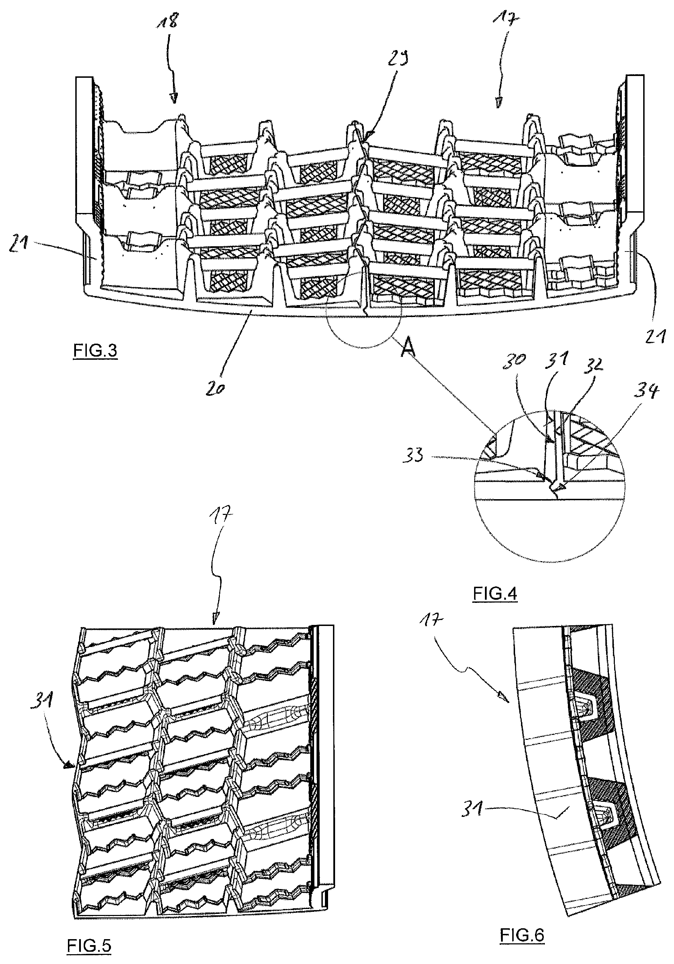

Eine Zusammenschau der **Fig. 1** bis **6** zeigt ein Reifenformsegment 10, welches aus einer Segmentbasis 11 und einem Formeinsatz 12 ausgebildet ist. Der Formeinsatz 12 ist in die Segmentbasis 11 eingesetzt und mittels Stiften 13, welche in Bohrungen 14 in der Segmentbasis 11 und dem Formeinsatz 12 eingesetzt sind, formschlüssig gesichert. Das Reifenformsegment 10 bildet zusammen mit einer Anzahl weiterer, hier nicht dargestellter Reifenformsegmente eine Reifenform aus. Der Formeinsatz 12 ist aus einer Matrize 15, welche eine Negativform 28 einer profilierten Lauffläche ausbildet, und einer Haltevorrichtung 16 ausgebildet. Die Matrize 15 besteht ihrerseits aus vier Matrizenelementen 17 bzw. 18.

Die Matrize 15 bildet eine Formschale 19 mit einem Boden bzw. einer Wandung 20 aus. Die Formschale 19 weist darüber hinaus Seitenwände 21 auf, in denen jeweils eine nutförmige Eintiefung 22 ausgebildet ist. Seitenwände 23 der Haltevorrichtung 16 weisen übereinstimmend ausgebildete Vorsprünge 24 auf. Die Matrize 15 kann so leicht in die Haltevorrichtung 16 eingeschoben und formschlüssig in axialer Richtung fixiert werden.

Die Formschale 19 weist weiter eine Mehrzahl von Stegen 25, 26 und 27 auf, die die Negativform 28 der profilierten Lauffläche eines Reifens abschnittsweise ausbilden. Die Matrize 15 weist eine Teilungsnaht 29 auf, die entlang einer Mittellinie 30 der Stege 25 verläuft und so die Matrize 15 in die Matrizenelemente 17 und 18 teilt. Durch die Ausbildung der Teilungsnaht 29 ergeben sich jeweils Passflächen 31 und 32 an den Matrizenelementen 17 bzw. 18. An der Passfläche 31 ist in Höhe der Wandung 20 bzw. entlang dieser ein keilförmiger Vorsprung 33 ausgebildet, der in eine übereinstimmend ausgebildete Eintiefung 34 in der Passfläche 32 eingreift. Darüber hinaus ist die Teilungsnaht 29 entsprechend der Anordnung der Stege 25 zickzackförmig ausgebildet, sodass sich hier die Matrizenelemente 17 und 18 formschlüssig ineinander fügen, derart, dass alleine ein gemeinsames Verschieben der Matrizenelemente 17 bzw. 18 in der Haltevorrichtung 16 möglich ist.

## Patentansprüche

1. Reifenformsegment (10) für eine Reifenform zum Vulkanisieren von Reifenrohlingen, wobei das Reifenformsegment aus einer Segmentbasis (11) und einem Formeinsatz (12) ausgebildet ist, wobei der Formeinsatz eine Negativform (28) einer Lauffläche eines Reifens ausbildet,
**dadurch gekennzeichnet,**
**dass** der Formeinsatz aus einer Matrize (15), welche die Negativform ausbildet, und einer Haltevorrichtung (16), welche die Matrize aufnimmt, gebildet ist, wobei die Matrize aus einer Mehrzahl von Matrizenelementen (17, 18) ausgebildet ist.

2. Reifenformsegment nach Anspruch 1,
**dadurch gekennzeichnet,**
**dass** die Matrize (15) aus 2, 4 oder 6 Matrizenelementen (17, 18) ausgebildet ist.

3. Reifenformsegment nach Anspruch 1 oder 2,
**dadurch gekennzeichnet,**
**dass** die Haltevorrichtung (16) in die Segmentbasis (11) lösbar eingesetzt und formschlüssig befestigt ist.

4. Reifenformsegment nach einem der vorangehenden Ansprüche,
**dadurch gekennzeichnet,**
**dass** die Matrize (15) die Negativform (28) der Lauffläche mit einem Profilmuster ausbildet, wobei die Negativform eine konkave Formschale (19) mit darin angeordneten Stegen (25, 26, 27) aufweist, die Profilblöcke und/oder Profilabschnitte ausbilden.

5. Reifenformsegment nach einem der vorangehenden Ansprüche,
**dadurch gekennzeichnet,**
**dass** eine Breite der Formschale (19) relativ zu einer Dicke der Formschale in einem Verhältnis von 100 : 1, bevorzugt 160 : 1, besonders bevorzugt 200 : 1 oder größer ausgebildet ist.

6. Reifenformsegment nach Anspruch 4 oder 5,
**dadurch gekennzeichnet,**
**dass** die Formschale (19) in die Haltevorrichtung (16) lösbar eingesetzt und formschlüssig befestigt ist.

7. Reifenformsegment nach Anspruch 6,
**dadurch gekennzeichnet,**
**dass** die Formschale (19) an parallelen Seitenrändern (21) einen Vorsprung und/oder eine Eintiefung (22) aufweist, der bzw. die mit einem Vorsprung (24) und/oder einer Eintiefung in Seitenwänden (23) der Haltevorrichtung (16) korrespondiert, derart, dass die Formschale zumindest in orthogonaler Richtung zu der Lauffläche in der Haltevorrichtung formschlüssig gehaltert ist.

8. Reifenformsegment nach einem der vorangehenden Ansprüche,
**dadurch gekennzeichnet,**
**dass** die Matrizenelemente (17, 18) zumindest entlang einer Teilungsnaht (29) der Matrize (15) jeweils eine Passfläche (31; 32) ausbilden, wobei die Passflächen übereinstimmend ausgebildet sind.

9. Reifenformsegment nach Anspruch 8,
**dadurch gekennzeichnet,**
**dass** eine Passfläche (31; 32) einen Vorsprung (33) und/oder eine Eintiefung (34) aufweist, der bzw. die mit einem Vorsprung (33) und/oder einer Eintiefung (34) einer übereinstimmenden Passfläche korrespondiert.

10. Reifenformsegment nach Anspruch 9,
**dadurch gekennzeichnet,**
**dass** die Eintiefung (34) und der Vorsprung (33) in einer Wandung (20) der Formschale (19) ausgebildet sind.

11. Reifenformsegment nach einem der Ansprüche 8 bis 10,
**dadurch gekennzeichnet,**
**dass** die Teilungsnaht (29) entlang einer Mittellinie (30) von Stegen (25, 26, 27) der Negativform (28) verlaufend ausgebildet ist.

12. Reifenformsegment nach einem der Ansprüche 8 bis 11,
**dadurch gekennzeichnet,**
**dass** die Teilungsnaht (29) in Längsrichtung und/oder in Querrichtung zu der Lauffläche verläuft.

13. Reifenformsegment nach einem der vorangehenden Ansprüche,
**dadurch gekennzeichnet,**
**dass** die Matrize (15) aus Edelstahl ausgebildet ist.

14. Reifenform, umfassend eine Mehrzahl von Reifenformsegmenten (10) nach einem der vorangehenden Ansprüche.

15. Verfahren zur Herstellung eines Reifenformsegments (10) mit einem Matrizenelement (17, 18) nach einem der Ansprüche 1 bis 13,
**dadurch gekennzeichnet,**
**dass** das Matrizenelement mittels Laserauftragsschweißen hergestellt wird.
